(19) Europäisches Patentamt
European Patent Office
Office européen des brevets

(11) Veröffentlichungsnummer: **0 017 038**
**A1**

(12) # EUROPÄISCHE PATENTANMELDUNG

(21) Anmeldenummer: 80101288.1

(22) Anmeldetag: 13.03.80

(51) Int. Cl.³: C 08 L 23/00
C 08 K 9/04, C 08 K 5/42
C 08 K 3/26

(30) Priorität: 17.03.79 DE 2910586

(43) Veröffentlichungstag der Anmeldung:
15.10.80 Patentblatt 80/21

(84) Benannte Vertragsstaaten:
AT BE CH DE FR GB IT NL SE

(71) Anmelder: HOECHST AKTIENGESELLSCHAFT
Zentrale Patentabteilung Postfach 80 03 20
D-6230 Frankfurt/Main 80(DE)

(72) Erfinder: Lüders, Walter, Dr.
Am Forsthaus Gravenbruch 49
D-6078 Neu-Isenburg(DE)

(72) Erfinder: Burg, Karlheinz, Dr.
Eichenweg 18
D-6200 Wiesbaden(DE)

(72) Erfinder: Herwig, Walter, Dr.
Hasenpfad 7
D-6232 Bad Soden am Taunus(DE)

(72) Erfinder: van Spankeren, Ulrich, Dr.
Frankfurter Strasse 62
D-6238 Hofheim am Taunus(DE)

(54) **Füllstoff enthaltende Kunststoff-Formmasse und Verfahren zu ihrer Herstellung.**

(57) Bei Füllstoff enthaltenden Kunststoff-Formmassen wird eine sehr gute Verträglichkeit zwischen dem hydrophilen Füllstoff und der hydrophoben Polymermatrix erreicht, wenn als Haftvermittler Alkalisalze von Alkyl- bzw. Alkylensulfonsäuren oder Alkylsulfaten und ihren Derivaten sowie die diesen Salzen zugrundeliegenden Säuren verwendet werden. Dabei werden das Fließverhalten der Formmassen und die mechanischen Eigenschaften der daraus hergestellten Kunststoffgegenstände verbessert.

EP 0 017 038 A1

HOECHST AKTIENGESELLSCHAFT HOE 79/F 066 Dr.DA/sch

Füllstoff enthaltende Kunststoff-Formmasse und Verfahren zu ihrer Herstellung

Bekanntlich lassen sich die mechanischen, elektrischen und thermischen Eigenschaften von Kunststoffen durch Zusatz anorganischer Füllstoffe verbessern. Diese Füllstoffe zeigen jedoch infolge ihrer hydrophilen Eigenschaften nur eine geringe Verträglichkeit mit den meist hydrophoben Polymeren. Das führt bei mit anorganischen Substanzen gefüllten Polymeren zu einer Verschlechterung einiger mechanischer Eigenschaften.

Es ist bekannt, natürliche oder synthetische Calciumcarbonate mit oberflächenaktiven Stoffen zu behandeln, um ihre Verteilbarkeit in Kunststoffen zu verbessern. Zu diesen Stoffen gehören gesättigte und ungesättigte Fettsäuren von mittlerem oder hohem Molekulargewicht, z.B. Buttersäure, Laurinsäure, Ölsäure, Stearinsäure (vgl. DE-PS 958 830).

Bekannt ist auch die Verwendung eines mit Stearinsäure behandelten Calciumcarbonats als Schlagfestkomponente bei der Herstellung von schlagfesten weichmacherfreien Formkörpern auf der Grundlage von Polyvinylchlorid (vgl. DE-AS 1 469 886).

Weiterhin ist bekannt, Calciumcarbonat mit Verbindungen, welche eine Ethylenbindung im Molekül enthalten, und

Radikalstartmittel zusammenzubringen (vgl. DE-OS 17 94 310, DE-OS 20 61 180).

Schließlich ist es auch bekannt, Erdalkalicarbonate mit wenigstens einer ungesättigten Carbonsäure unter Rühren in Abwesenheit von flüssigem Wasser im pulverförmigen anorganischen Material umzusetzen. Dabei können freie Radikale bildende Stoffe zugegen sein (vgl. DE-AS 22 62 126).

Es hat sich jedoch gezeigt, daß die mit der Verwendung von modifizierten Erdalkalicarbonaten erzielten Verbesserungen der mechanischen Eigenschaften noch nicht ausreichen, insbesondere bei Polyolefinen.

Es ist auch bekannt, als Haftvermittler zwischen dem Erdalkalicarbonat und dem Polyolefin phosphororganische Verbindungen, insbesondere Phosphonsäuren und ihre Ester, zu verwenden (vgl. DE-OS 27 35 160). Es hat sich indessen gezeigt, daß die mit diesen Verbindungen erreichbaren Verbesserungen des Extruderdurchsatzes noch nicht ausreichen.

Es wurde nun gefunden, daß eine sehr gute Verträglichkeit zwischen dem hydrophilen Füllstoff und der hydrophoben Polymermatrix erreicht wird, was zu verbesserten mechanischen Eigenschaften von daraus hergestellten Kunststoffgegenständen führt, wenn als Haftvermittler bestimmte schwefelorganische Verbindungen verwendet werden. Dabei wird gleichzeitig das Fließverhalten der Formmassen wesentlich verbessert.
Gegenstand der Erfindung ist eine Füllstoff enthaltende Kunststoff-Formmasse bestehend aus
90 - 20 Gewichtsteilen eines Polyolefins
10 - 80 Gewichtsteilen eines Erdalkalicarbonats
üblichen Zusatzstoffen, sowie 0,1 - 10 Gew.-%, bezogen auf den Füllstoff, eines Haftvermittlers, dadurch gekennzeichnet, daß sie als Haftvermittler eine schwefelorganische Verbindung der Formel

$$R - SO_3 - Me \qquad (I)$$

worin R
einen geradkettigen oder verzweigten Alkyl- oder Alkenylrest mit 6 bis 22 Kohlenstoffatomen, welcher durch eine Hydroxy- oder Acetoxygruppe substituiert sein kann,
den Rest $R^1-O(CH_2CH_2O)_m-$, worin $R^1$ einen Alkylrest mit 6 bis 22 Kohlenstoffatomen bedeutet und m 1 bis 4 ist,
den Rest $R^1-CO-O(CH_2)_n-$, worin $R^1$ die vorgenannte Bedeutung hat und n 2 bis 4 ist, oder
den Rest $R^1-CO-NH(CH_2)_n-$, worin $R^1$ und n die vorgenannten Bedeutungen haben, und
Me oder Wasserstoff ein Alkalimetall bedeuten, enthält.

Die erfindungsgemäß zu verwendenden schwefelorganischen Verbindungen der Formel (I) sind Alkalisalze von Alkyl- bzw. Alkenylsulfonsäuren oder Alkylsulfaten und ihren Derivaten, sowie die diesen Salzen zugrundeliegenden Säuren.

In der Formel (I) bedeutet R einen geradkettigen oder verzweigten Alkyl- oder Alkenylrest mit 6 bis 22, vorzugsweise 10 bis 17 Kohlenstoffatomen, welcher durch eine Hydroxy- oder Acetoxygruppe substituiert sein kann, R bedeutet ebenso den Rest der Formel $R^1-O(CH_2CH_2O)_m-$, worin $R^1$ einen Alkylrest mit 6 bis 22, vorzugsweise 10 bis 14 Kohlenstoffatomen bedeutet und m eine ganze Zahl von 1 bis 4 darstellt. Bevorzugt ist ein Diethylenglykoletherrest, d.h. m ist 2. R kann auch bedeuten den Rest der Formel $R^1-CO-O(CH_2)_n-$, worin $R^1$ die vorgenannte Bedeutung hat und n eine ganze Zahl von 2 bis 6, vorzugsweise 2 ist. Schließlich kann R auch den Rest der Formel $R^1-CO-NH(CH_2)_n-$ bedeuten, wobei $R^1$ und n die vorgenannte Bedeutung haben. Me ist ein Alkalimetall oder Wasserstoff, vorzugsweise Natrium.

Die erfindungsgemäß zu verwendenden Alkyl- bzw. Alkenylsulfonsäuren oder Alkylsulfate und ihre Derivate lassen sich nach bekannten Methoden darstellen.

So lassen sich die Alkylsulfonsäuren beispielsweise durch Sulfoxydation von aliphatischen Kohlenwasserstoffen, durch

Umsetzung von Alkylhalogeniden mit Sulfiten oder durch Verseifung der durch Sulfochlorierung von Kohlenwasserstoffen entstehenden Alkylsulfochloride herstellen (Houben-Weyl, Methoden der Organischen Chemie, Bd. IX, Thieme Verlag, Stuttgart 1955).

Die den Alkali-alkylsulfaten zugrunde liegenden Säuren lassen sich beispielsweise durch Umsetzung der entsprechenden Alkohole mit Schwefeltrioxyd herstellen.

Ist R in der Formel (I) ein Acyloxy- oder Acylaminoalkylenrest, so lassen sich die den Alkali-alkylsulfonaten zugrunde liegenden Säuren durch Kondensation von Carbonsäuren mit Oxalkylensulfonsäuren bzw. Aminoalkylensulfonsäuren auf bekannte Weise herstellen.

Geeignete Sulfonsäuren sind beispielsweise die Hexan-1-sulfonsäure, Heptan-1-sulfonsäure, Octan-1-sulfonsäure, Octan-2-sulfonsäure, Nonan-1-sulfonsäure, Nonan-5-sulfonsäure, Decan-1-sulfonsäure, Undecan-1-sulfonsäure, Dodecan-1-sulfonsäure, Dodecan-4-sulfonsäure, Tetradecan-1-sulfonsäure, Hexadecan-1-sulfonsäure, Octadecan-1-sulfonsäure, Docosan-1-sulfonsäure, 2,4,4-Trimethyl-pent-1-en-1-sulfonsäure, Hexadec-2-en-1-sulfonsäure, 2-Hydroxy-dodecan-1-sulfonsäure, 2-Hydroxy-tetradecan-1-sulfonsäure, 2-Hydroxy-hexadecan-1-sulfonsäure, 2 - Acetoxy-dodecan-1-sulfonsäure, 2-Acetoxy-tetradecan-1-sulfonsäure, 2-(Octanoyloxy)-ethan-1-sulfonsäure, 2-(Undecanoyloxy)-ethan-1-sulfonsäure, 2-(Dodecanoyloxy)-ethan-1-sulfonsäure, 2-(Tetradecanoyloxy)-ethan-1-sulfonsäure, 2-(Heptadecanoyloxy)-ethan-1-sulfonsäure, 2-(Oleoyloxy)-ethan-1-sulfonsäure, 2-(Undecanoylamino)-ethan-1-sulfonsäure, 2-(Dodecanoylamino)-ethan-1-sulfonsäure, 2-(Tetradecanoylamino)-ethan-1-sulfonsäure, 2-(Heptadecanoylamino)-ethan-1-sulfonsäure, 2-(Heptadecanoyl-2-methylamino)-ethan-1-sulfonsäure, 2-(Octadecanoyl-2-methylamino)-ethan-1-sulfonsäure, 2-(Oleoylamino)-ethan-1-sulfonsäure, und die der durch Sulfoxydation aliphatischer Kohlenwasserstoffgemische leicht herstallbaren Sulfonsäuren mit verschiedener C-Kettenzahl sowie die Natrium und Kaliumsalze dieser Säuren.

Bevorzugt verwendet werden Hexadec-2-en-1-sulfonsaures Natrium, 2-Hydroxy-dodecan-1-sulfonsaures Natrium, 2-Hydroxy-tetradecan-1-sulfonsaures Natrium, 2-Hydroxy-hexadecan-1-sulfonsaures Natrium, 2-Acetoxy-dodecan-1-sulfonsaures Natrium, 2-Acetoxy-tetradecan-1-sulfonsaures Natrium, 2-(Oleoyloxy)-ethan-1-sulfonsaures Natrium, 2-(Undecanoyloxy)-ethan-1-sulfonsaures Natrium, 2-(Heptadecanoyloxy)-ethan-1-sulfonsaures Natrium, 2-(Tetradecanoyl-amino)-ethan-1-sulfonsaures Natrium und sekundäres $C_{13}$ - $C_{18}$ n-Alkansulfonsaures Natrium.

Geeignete Schwefelsäureester sind beispielsweise

Schwefelsäure-mono-(2-dodecylether)-ethylenglykolester, Schwefelsäure-mono-(octylether)diethylenglykolester, Schwefelsäure-mono-(hexadecylether)-ethylenglykolester, Schwefelsäure-mono-(dodecylether)-diethylenglykolester, Schwefelsäure-mono-(tetradecylether)-diethylenglykolester, Schwefelsäure-mono-(hexadecylether)-diethylenglykolester, Schwefelsäure-mono-(octadecylether)-diethylenglykolester, Schwefelsäure-mono-(dodecylether)-triethylenglykolester, Schwefelsäure-mono-(hexadecylether)-triethylenglykolester und Schwefelsäure-mono-(dodecylether)-tetraethylenglykol-ester und ihre Kalium- und Natriumsalze.

Bevorzugt verwendet werden das Natriumsalz des Schwefelsäure-mono-(dodecylether)-diethylenglykolester und das Natriumsalz des Schwefelsäure-mono-(dodecylether)-triethy-lenglykolester.

Die erfindungsgemäß zu verwendenden Sulfonsäuren, Sulfonate und Schwefelsäureester und Sulfate werden der Formmasse in einer Menge von 0,1 - 10 Gew.-%, vorzugsweise 0,5 - 2 Gew.-%, bezogen auf den Füllstoff, zugesetzt. Dabei können auch Mischungen verschiedener Sulfonate mit Sulfaten zur Anwendung kommen.

Der Füllstoff kann ein natürliches oder synthetisches, d.h. ausgefälltes Erdalkalicarbonat sein. Geeignete Carbonate sind beispielsweise Kalksteinmehl, Kreide, gefälltes Calciumcarbonat, natürlicher Magnesit, natürlicher Hydromagnesit, synthetisches basisches Magnesiumcarbonat, Calcium-Magnesium-carbonat, Dolomit. Bevorzugt verwendet werden die Calciumcarbonate. Die erfindungsgemäß zu verwendenden Erdalkalicarbonate haben einen mittleren Teilchendurchmesser von 0,1 - 50µm, vorzugsweise 1 - 10 µm. Es können auch Mischungen verschiedener Erdalkalicarbonate eingesetzt werden.

Das Einbringen der Haftvermittler in die Formmasse kann auf verschiedene Weise erfolgen.

Sc kann man den Füllstoff in einem organischen Lösungsmittel suspendieren, den Haftvermittler direkt oder in einem geeigneten Lösungsmittel gelöst zusetzen, das Gemisch bei Raumtemperatur oder erhöhter Temperatur gut durchrühren, das Lösungsmittel abdestillieren und den Rückstand trocknen. Man kann den Füllstoff auch mit dem Haftvermittler in einem Mischer bei Raumtemperatur oder bei erhöhter Temperatur, wobei die Temperatur gegebenenfalls oberhalb des Schmelzpunktes des Haftvermittlers liegt, durchmischen.

Ist der Haftvermittler flüssig, kann er direkt oder mit einem geeigneten Lösungsmittel verdünnt zu dem Füllstoff in einem Schnellaufmischer getropft oder aus einer Zerstäubungsvorrichtung in Form eines Nebels auf den Füllstoff gesprüht werden. Auf diese Weise können auch feste Haftvermittler in einem geeigneten Lösungsmittel gelöst auf den Füllstoff gebracht werden.

Alternativ kann der Haftvermittler in einem Mischer mit dem Polymeren vermischt und anschließend der unbehandelte Füllstoff zugegeben werden, oder es können alle drei Komponenten, nämlich das Polymere, der Füllstoff und der Haftvermittler gleichzeitig vermischt werden. Dieses gleichzeitige Mischen kann in einem Vormischer, jedoch auch im Granulierextruder erfolgen.

Vorzugsweise wird zunächst der Füllstoff mit dem Haftvermittler behandelt.

Der Füllstoff wird dem Polymer in einer Menge von 10 - 80 Gew.-%, vorzugsweise 30 - 70 Gew.-% zugemischt.

Für die erfindungsgemäßen Kunststoff-Formmassen eignen sich als Basispolymere 1-Olefin-Homo- und Copolymere, beispielsweise Polyethylen von hoher Dichte und niedriger Dichte, Polypropylen, Polybuten-1-, Poly(4-methyl)-penten-1-, Olefincopolymerisate wie Ethylen-Propylen-Copolymerisate und Ethylen-Buten-Copolymerisate, Gemische dieser Polymerisate und Gemische dieser Polymerisate mit kautschukartigen Polymeren.

Besonders bevorzugt wird Polyethylen verwendet.

Der Gehalt der Formmassen an Polymer beträgt 90 - 20, vorzugsweise 70 - 30 Gew.-%.

Die erfindungsgemäßen Formmassen können die üblichen, die Verarbeitung erleichternden und die physikalischen Eigenschaften verbessernden Zusatzstoffe enthalten. Als solche sind zu nennen Licht- und Wärmestabilisatoren, Antioxydantien, Antistatika udgl. sowie Farbpigmente, Flammschutzmittel. Die erste Gruppe ist in den Formmassen im allgemeinen in einer Menge von 0,01 - 5 Gew.-%, berechnet auf die Menge Polymer plus Füllstoff, enthalten. Farbpigmente und Flammschutzmittel werden in einer Menge entsprechend den Bedürfnissen eingesetzt.

Eine wirksame Stabilisatorkombination für Poly-1-olefine,

wie z.B. Hoch-, Mittel- und Niederdruckpolymerisate von $C_2$- bis $C_4$-1-Olefinen, insbesondere Polyethylen und Polypropylen, oder von Copolymerisaten derartiger 1-Olefine kann beispielsweise bestehen, jeweils bezogen auf 100 Gew.-Teile Polymer, aus 0,05 - 4 Gew.-Teilen eines phenolischen Stabilisators, gegebenenfalls 0,01 - 4 Gew.-Teilen eines schwefelhaltigen Costabilisators, sowie gegebenenfalls 0,01 - 3 Gew.-Teilen einer basischen oder neutralen Metallseife, wie z.B. Calcium- oder Zinkstearat, sowie gegebenenfalls 0,1 - 4 Gew.-Teile eines Phosphits und gegebenenfalls 0,01 - 4 Gew.-Teilen eines bekannten UV-Stabilisators aus der Gruppe der Alkoxyhydroxybenzophenone, Hydroxyphenylbenzotriazole, Benzylidenmalonsäure-mononitrilester oder der sog. Quenscher (z.B. Nickelchelate).

Formteile, hergestellt aus der erfindungsgemäßen thermoplastischen Formmasse, haben eine sehr gute Schlagzähigkeit und Schlagzugzähigkeit, wodurch sie sich besonders zur Herstellung technischer Artikel eignen.

Ein wesentlicher Vorteil der erfindungsgemäß zu verwendenden Haftvermittler besteht darin, daß sie das Einzugsverhalten der Pulvermischung in den Extruder verbessern und das Fließverhalten der Polymerschmelze günstig beeinflussen, was beim Homogenisierschritt im Extruder zu einem höheren Durchsatz führt und beim Spritzgießen die Herstellung komplizierter Spritzgußteile erleichtert.

Der Gegenstand der Erfindung wird durch die nachstehenden Beispiele näher erläutert.

Beispiel 1

500 Teile Calciumcarbonat mit einem mittleren Teilchendurchmesser von 2,5 µm und einer spezifischen Oberfläche (nach BET) von $2m^2/g$ werden in 2000 Teilen Ethanol suspendiert.

Unter gutem Rühren werden 7,5 Teile Natrium-hexadec-2-en-1-sulfonat zugegeben. Die Suspension wird 3 Stunden bei Raumtemperatur nachgerührt, anschließend wird das Ethanol im Vakuum abdestilliert und der Rückstand bei 40°C im Vakuumtrockenschrank getrocknet.

450 Teile des so behandelten Calciumcarbonats werden mit 1050 Teilen Polyethylen (Dichte 0,96 $g/cm^3$, Schmelzindex 23 g/10 min., enthaltend 0,42 Gew.-% eines phenolischen Stabilisators und 2,5 Gew.-% eines schwefelhaltigen Costabilisators) in einem Pflugschaufelmischer gut vermischt.

Das erhaltene Gemisch wird in einem Zweischneckenextruder zu einem Strang extrudiert, der dann in einer Schneidmaschine granuliert wird. Aus dem Granulat werden mit einer Spritzgußmaschine Prüfkörper hergestellt.

In einem Vergleichsbeispiel werden 450 Teile unbehandeltes Calciumcarbonat mit 1050 Teilen Polyethylen auf die gleiche Weise gemischt. Das Gemisch wird wie vorstehend beschrieben, weiter verarbeitet.

Die Eigenschaften der Prüfkörper sind in Tabelle I aufgeführt. Als Probekörper dient ein 1/2 Normstab.

Dehnung und Zugfestigkeit werden nach DIN 53 455, Schlagzähigkeit nach DIN 53 453 (30 mm Backenabstand, Querlage), Schlagzugzähigkeit nach DIN 53 448 bestimmt.

Tabelle I

| Haftvermittler | Dehnung % | Zugfestigkeit N/mm² | Schlag-zähigkeit mJ/mm³ | Schlagzug-zähigkeit mJ/mm² |
|---|---|---|---|---|
| - | 20 | 23 | 40 | 80 |
| Na-hexadec-2-en-1-sulfonat | 26 | 22 | 105 | 95 |

Beispiele 2 - 4

500 Teile des gleichen Calciumcarbonats wie in Beispiel 1 werden in einem Schnellaufmischer mit 7,5 Teilen Haftvermittler bei 1200 U/min. für 20 Minuten bei Raumtemperatur gemischt.

450 Teile des so behandelten Calciumcarbonats werden mit 1050 Teilen des ebenfalls gleichen Polyethylens gemischt und die Mischung wird wie in Beispiel 1 beschrieben weiterverarbeitet.

Die Eigenschaften der Prüfkörper sind in Tabelle II aufgeführt.

Tabelle II

| Haftvermittler | Dehnung % | Zugfestigkeit N/mm² | Schlag-zähigkeit mJ/mm² | Schlagzug-zähigkeit mJ/mm² |
|---|---|---|---|---|
| $C_{10-16}H_{21-33}$-COO-$CH_2$-$CH_2$-$SO_3Na$ | 22 | 22 | ohne Bruch | 95 |
| Na-2-(Oleoyloxy)-ethan-1-sulfonat | 20 | 22 | ohne Bruch | 95 |
| sek. Na-n-alkansulfonat[1)] | 22 | 23 | ohne Bruch | 95 |

1) Kettenverteilung: 3 % $C_{13}$, 25 % $C_{14}$, 30 % $C_{15}$, 25 % $C_{16}$, 15 % $C_{17}$, 2 % $C_{18}$

Beispiele 5 - 12

500 Teile Calciumcarbonat vom Calcit-Typ mit einem mittleren Teilchendurchmesser von 1,5 µm und einer spezifischen Oberfläche (nach BET) von 7 m²/g werden in einem Schnellaufmischer mit 7,5 Teilen verschiedener Haftvermittler bei 1200 U/min für 20 Minuten bei Raumtemperatur gemischt.

450 Teile des so behandelten Calciumcarbonats werden mit 1050 Teilen Polyethylen (Dichte 0,96 g/cm³, Schmelzindex 23 g/10 min) in einem Pflugschaufelmischer gut vermischt. Die Weiterverarbeitung des Gemisches erfolgt wie im Beispiel 1 beschrieben. Die Eigenschaften der Prüfkörper sind in Tabelle III aufgeführt.

Beispiel 13

Zu 500 Teilen Calciumcarbonat vom Calcit-Typ mit einem mittleren Teilchendurchmesser von 1,5 µm und einer spezifischen Oberfläche (nach BET) von 7 m²/g wird aus einer Zerstäubungsvorrichtung eine Lösung von 4,5 Teilen eines sek. Na-n-alkansulfonats (Kettenverteilung: 3 % $C_{13}$, 25 % $C_{14}$, 30 % $C_{15}$, 25 % $C_{16}$, 15 % $C_{17}$, 2 % $C_{18}$) in 18 Teilen Wasser innerhalb 45 Minuten in einem Schnellaufmischer bei 1200 U/min gesprüht.

450 Teile des so behandelten Calciumcarbonats werden mit 1050 Teilen Polyethylen (Dichte 0,96 g/cm³, Schmelzindex 23 g/10 min, enthaltend 0,42 Gew.-% eines phenolischen Stabilisators und 2,5 Gew.-% eines schwefelhaltigen Costabilisators) in einem Pflugschaufelmischer gut vermischt. Die Weiterverarbeitung des Gemisches erfolgt wie in Beispiel 1 beschrieben. Die Eigenschaften der Prüfkörper sind in Tabelle III aufgeführt.

Beispiel 14

Das Beispiel 13 wird wiederholt, nur daß anstelle des sek. Na-n-alkansulfonats eine Lösung von 5 Teilen des Natriumsalzes von Schwefelsäure-mono-(dodecylether)-diethylenglykolester in 40 Teilen Wasser eingesetzt wird. Die Weiterverarbeitung des Gemisches erfolgt wie im Beispiel 1 beschrieben. Die Eigenschaften der Prüfkörper sind in Tabelle III aufgeführt.

Tabelle III

| Beispiel | Haftvermittler | Dehnung % | Zugfestigkeit N/mm² | Schlagzähigkeit mJ/mm² | Schlagzugzähigkeit mJ/mm² |
|---|---|---|---|---|---|
| Vergl. | - | 21 | 27 | 47 | 80 |
| 5 | $C_{10-16}H_{21-33}COO-(CH_2)_2-SO_3Na$ | 34 | 23 | ohne Bruch | 90 |
| 6 | $C_{14}H_{29}CH(OH)-CH_2SO_3Na$ | 28 | 23 | 80 | 95 |
| 7 | $C_{13}H_{27}CH{=}CH-CH_2-SO_3Na$ | 30 | 22 | 80 | 95 |
| 8 | sek. Na-n-alkansulfonat | 32 | 22 | ohne Bruch | 85 |
| 9 | $C_{12}H_{25}CH{=}CH-CH_2-SO_3K$ | 26 | 23 | 100 | 90 |
| 10 | $C_{14}H_{29}CH(OCOCH_3)-CH_2-SO_3Na$ | 30 | 22 | 80 | 90 |
| 11 | $C_{10-16}H_{21-33}CONH(CH_2)_2-SO_3Na$ | 28 | 22 | 70 | 85 |
| 12 | Na-2(Oleoylamino)-ethan-1-sulfonat | 32 | 21 | ohne Bruch | 90 |
| 13 | sek. Na-n-alkansulfonat | 30 | 23 | ohne Bruch | 85 |
| 14 | $C_{12}H_{25}-O(CH_2-CH_2-O)_2-SO_3Na$ | 32 | 23 | 100 | 85 |

Beispiele 15 - 17

600 Teile Calciumcarbonat mit einem mittleren Teilchendurchmesser von 2,5 µm und einer spezifischen Oberfläche (nach BET) von 2 m²/g werden in einem Schnellaufmischer mit verschiedenen Mengen eines sek. Na-n-alkansulfonats (Kettenverteilung: 3 % $C_{13}$, 25 % $C_{14}$, 30 % $C_{15}$, 25 % $C_{16}$, 15 % $C_{17}$, 2 % $C_{18}$) bei 800 U/min für 30 Minuten bei Raumtemperatur gemischt.

Das so behandelte Calciumcarbonat wird mit 900 Teilen des im Beispiel 1 beschriebenen Polyethylens in einem Pflugschaufelmischer gut vermischt. Die Weiterverarbeitung erfolgt wie im Beispiel 1 beschrieben.
In einem Vergleichsbeispiel wird unbehandeltes Calciumcarbonat mit Polyethylen im Verhältnis 6 : 9 gemischt und wie beschrieben weiter verarbeitet.

Die Eigenschaften der Prüfkörper sind in Tabelle IV aufgeführt.

Tabelle IV

| Beispiel | Gehalt Haftvermittler[1)] % | Dehnung % | Zugfestigkeit N/mm² | Schlagzähigkeit mJ/mm² | Schlagzugzähigkeit mJ/mm² |
|---|---|---|---|---|---|
| Vergl. | - | 14 | 21 | 13 | 70 |
| 15 | 0,5 | 19 | 21 | 64 | 75 |
| 16 | 1,0 | 19 | 21 | 88 | 80 |
| 17 | 2,0 | 18 | 22 | 85 | 75 |

1) bezogen auf Füllstoffmenge

Beispiele 18 - 20

Das Beispiel 16 wird wiederholt, nur daß anstelle des sek. Na-n-alkansulfonats andere Haftvermittler eingesetzt werden.

Tabelle V

| Beispiel | Haftvermittler | Dehnung % | Zugfestigkeit N/mm² | Schlagzähigkeit mJ/mm² | Schlagzugzähigkeit mJ/mm² |
|---|---|---|---|---|---|
| 18 | $C_{13}H_{27}CH{=}CH{-}CH_2{-}SO_3Na$ | 15 | 21 | 42 | 75 |
| 19 | $C_{12}H_{25}{-}O(CH_2{-}CH_2{-}O)_2{-}SO_3Na$ | 13 | 21 | 39 | 75 |
| 20 | 2-(Oleoyloxy)-ethan-1-sulfonsaures-Na | 16 | 20 | 41 | 75 |

Beispiel 21

750 Teile Calciumcarbonat mit einem mittleren Teilchendurchmesser von 2,5 µm und einer spezifischen Oberfläche (nach BET) von 2 m²/g werden in einem Schnellaufmischer mit 11 Teilen eines Sulfonats der Formel $C_{10-16}H_{21-33}COOCH_2{-}CH_2{-}SO_3{-}Na$ bei 1200 U/min für 20 Minuten bei Raumtemperatur

gemischt.
Das so behandelte Calciumcarbonat wird mit 750 Teilen des im Beispiel 1 beschriebenen Polyethylens in einem Pflugschaufelmischer gut vermischt. Die Weiterverarbeitung erfolgt wie im Beispiel 1 beschrieben. In einem Vergleichsbeispiel wird unbehandeltes Calciumcarbonat mit Polyethylen im Verhältnis 1:1 gemischt und wie beschrieben weiter verarbeitet.
Die Eigenschaften der Prüfkörper sind in Tabelle VI aufgeführt.

Beispiel 22:
Das Beispiel 21 wird wiederholt, jedoch mit dem sek. Na-n-alkansulfonat der Beispiele 15 - 17 als Haftvermittler.

Die Eigenschaften der Prüfkörper sind in Tabelle VI aufgeführt.

Tabelle VI

| Beispiel | Dehnung % | Zugfestigkeit $N/mm^2$ | Schlagzähigkeit $mJ/mm^2$ | Schlagzugzähigkeit $mJ/mm^2$ |
|---|---|---|---|---|
| Vergleich | 4 | 25 | 8 | 55 |
| 21 | 10 | 20 | 22 | 60 |
| 22 | 9 | 19 | 31 | 65 |

Beispiel 23
750 Teile Calciumcarbonat vom Calcit-Typ mit einem mittleren Teilchendurchmesser von 5 µm und einer spezifischen Oberfläche (nach BET) von 1 $m^2/g$ werden in einem Schnelllaufmischer mit 7,5 Teilen Na-2-(Oleoyloxy)-ethan-1-sulfonat bei 1200 U/min für 20 Minuten bei Raumtemperatur gemischt.

Das so behandelte Calciumcarbonat wird mit 750 Teilen des im Beispiel 1 beschriebenen Polyethylens in einem Pflugschaufelmischer gut vermischt. Die Weiterverarbeitung erfolgt wie im Beispiel 1 beschrieben.

In einem Vergleichsbeispiel wird das unbehandelte Calciumcarbonat mit Polyethylen im Verhältnis 1:1 gemischt und wie beschrieben weiter verarbeitet.
Die Eigenschaften der Prüfkörper sind in Tabelle VII aufgeführt.

Beispiel 24

Das Beispiel 23 wird wiederholt, jedoch mit dem sek. Na-n-alkansulfonat der Beispiele 15-17 als Haftvermittler.
Die Eigenschaften der Prüfkörper sind in Tabelle VII aufgeführt.

Tabelle VII

| Beispiel | Dehnung<br>% | Zugfestigkeit<br>N/mm² | Schlagzähigkeit<br>mJ/mm² | Schlagzugzähigkeit<br>mJ/mm² |
|---|---|---|---|---|
| Vergleich | 10 | 20 | 7 | 70 |
| 23 | 12 | 18 | 36 | 75 |
| 24 | 15 | 17 | 77 | 75 |

Beispiele 25 - 28

900 Teile Calciumcarbonat mit einem mittleren Teilchendurchmesser von 2,5 µm und einer spezifischen Oberfläche (nach BET) von 2 $m^2/g$ werden in einem Schnellaufmischer mit 13,5 Teilen verschiedener Haftvermittler bei 1200 U/min für 20 Minuten bei Raumtemperatur gemischt.

Das so behandelte Calciumcarbonat wird mit 600 Teilen des im Beispiel 1 beschriebenen Polyethylens in einem Pflugschaufelmischer gut vermischt. Die Weiterverarbeitung erfolgt wie im Beispiel 1 beschrieben. In einem Vergleichsbeispiel wird unbehandeltes Calciumcarbonat mit Polyethylen im Verhältnis 3:2 gemischt und wie beschrieben weiter verarbeitet.
Die Eigenschaften der Prüfkörper sind in Tabelle VIII aufgeführt.

Tabelle VIII

| Beispiel | Haftvermittler | Dehnung % | Zugfestigkeit $N/mm^2$ | Schlagzähigkeit $mJ/mm^2$ | Schlagzugzähigkeit $mJ/mm^2$ |
|---|---|---|---|---|---|
| Vergl. | - | 6 | 18 | 4 | 55 |
| 25 | $C_{10-16}H_{21-33}COO(CH_2)_2-SO_3Na$ | 10 | 16 | 10 | 65 |
| 26 | $C_{13}H_{27}CH=CH-CH_2-SO_3Na$ | 9 | 17 | 17 | 70 |
| 27 | $C_{12}H_{25}-O(CH_2-CH_2-O)-SO_3Na$ 1) | 8 | 17 | 7 | 65 |
| 28 | sek. Na-n-alkansulfonate 2) | 9 | 17 | 34 | 75 |

1) aufgesprüht in 25%iger wässr. Lösung

2) Kettenverteilung: 3 % $C_{13}$, 25 % $C_{14}$, 30 % $C_{15}$, 25 % $C_{16}$, 15 % $C_{17}$, 2 % $C_{18}$

Beispiel 29

950 Teile Polyethylen (Dichte 0,96 g/cm³, Schmelzindex 23 g/10 min., stablisiert wie in Beispiel 1) und 6,3 Teile sek. Natrium-n-alkansulfonat mit einer C-Kettenverteilung wie im Beispiel 28 werden in einem Schnellaufmischer bei 1200 U/min für 20 Minuten bei Raumtemperatur gemischt.

900 Teile des so behandelten Polyethylens werden in einem Pflugschaufelmischer mit 600 Teilen Calciumcarbonat (mittlerer Teilchendurchmesser 2,5 µm, spezifische Oberfläche 2 m²/g) gut vermischt.
Die Weiterverarbeitung des Gemisches erfolgt wie in Beispiel 1 beschrieben. Die Eigenschaften der Prüfkörper sind in Tabelle IX aufgeführt. Als Vergleich dient eine Formmasse mit Calciumcarbonat ohne Haftvermittler.

Beispiel 30

1050 Teile Polyethylen (Dichte 0,96 g/cm³, Schmelzindex 23 g/10 min., stabilisiert wie in Beispiel 1), 450 Teile Calciumcarbonat (mittlerer Teilchendurchmesser 2,5 µm, spezifische Oberfläche 2 m²/g) und 6,75 Teile sek. Na-n-alkansulfonat (C-Kettenverteilung wie im Beispiel 28) werden bei Raumtemperatur in einem Schnellaufmischer für

4 Minuten gemischt. Extrusion und Ausprüfung erfolgen wie im Beispiel 1 beschrieben.

Die Eigenschaften der Prüfkörper sind in Tabelle IX aufgeführt. Als Vergleich dient eine Formmasse mit Calciumcarbonat ohne Haftvermittler.

Tabelle IX

| Beispiel | Dehnung % | Zugfestigkeit $N/mm^2$ | Schlagzähigkeit $mJ/mm^2$ | Schlagzugzähigkeit $mJ/mm^2$ |
|---|---|---|---|---|
| Vergleich | 14 | 21 | 13 | 70 |
| 29 | 16 | 21 | 45 | 75 |
| Vergleich | 20 | 23 | 40 | 80 |
| 30 | 32 | 22 | ohne Bruch | 100 |

Beispiel 31

600 Teile Calciumcarbonat (mittlerer Teilchendurchmesser 2,5 µm, spezifische Oberfläche 2 $m^2/g$) werden in einem Schnelllaufmischer bei 1200 U/min. für 20 Minuten mit 9 Teilen sek. Na-n-alkansulfonat (C-Kettenverteilung wie im Beispiel 28) bei Raumtemperatur gemischt.

Das so behandelte Calciumcarbonat wird mit 900 Teilen Polypropylen (Dichte 0,905 $g/cm^3$, Schmelzindex 7 g/10 min, enthaltend 0,5 Gew.-% eines phenolischen Stabilisators und 1,75 Gew.-% eines schwefelhaltigen Costabilisators) in einem Pflugschaufelmischer gut vermischt.

Für einen Vergleichsversuch werden 600 Teile unbehandeltes Calciumcarbonat mit 900 Teilen Polypropylen auf die gleiche Weise gemischt.
Die Weiterverarbeitung der Mischungen, die Herstellung der Prüfkörper und die Ausprüfung werden wie in Beispiel 1 beschrieben durchgeführt.

Die Eigenschaften der Prüfkörper zeigt Tabelle X.

Beispiel 32

900 Teile des im Beispiel 31 beschriebenen Calciumcarbonats werden in einem Schnellaufmischer bei 1200 U/min für 20 Minuten mit 13,5 Teilen sek. Na-n-alkansulfonat (C-Kettenverteilung wie im Beispiel 28) bei Raumtemperatur gemischt.

Das so behandelte Calciumcarbonat wird mit 600 Teilen Polypropylen des Beispiels 31 in einem Pflugschaufelmischer gut vermischt.
Für einen Vergleichsversuch wird unbehandeltes Calciumcarbonat mit Polypropylen im Verhältnis 3:2 gemischt.
Die Weiterverarbeitung der Mischung, die Herstellung der Prüfkörper und die Ausprüfung werden wie im Beispiel 1 beschrieben durchgeführt.
Die Eigenschaften der Prüfkörper zeigt Tabelle X.

Tabelle X

| Beispiel | Dehnung % | Zugfestigkeit N/mm² | Schlagzähigkeit mJ/mm² | Schlagzugzähigkeit mJ/mm² |
|---|---|---|---|---|
| Vergleich | 23 | 68 | 42 | 180 |
| 31 | 22 | 90 | 86 | 210 |
| Vergleich | 18 | 54 | 13 | 120 |
| 32 | 16 | 84 | 70 | 150 |

Beispiel 33

600 Teile Calciumcarbonat mit einem mittleren Teilchendurchmesser von 2,5 µm und einer spezifischen Oberfläche (nach BET) von 2 $m^2/g$ werden in einem Schnellaufmischer mit 9 Teilen sek. Na-n-alkansulfonat (C-Kettenverteilung wie im Beispiel 28) bei Raumtemperatur für 20 Minuten gemischt.

Das so behandelte Calciumcarbonat wird mit 1400 Teilen Polyethylen (Dichte 0,96 $g/cm^3$, Schmelzindex 23 g/10 min., enthaltend 0,42 Gew.-% eines phenolischen Stabilisators und 2,5 Gew.-% eines schwefelhaltigen Costabilisators) in einem Pflugschaufelmischer gut vermischt. Das erhaltene

Gemisch wird in einem Zweischneckenextruder vom Typ ZSK der Firma Werner und Pfleiderer aufgeschmolzen. Die Schmelze wird über eine Düse ausgepreßt, als Strang abgezogen und mit einer Schneidvorrichtung granuliert.

Zu einem Vergleichsbeispiel werden 600 Teile unbehandeltes Calciumcarbonat mit 1400 Teilen Polyethylen auf die gleiche Weise gemischt. Das Gemisch wird wie vorstehend beschrieben, weiter verarbeitet unter denselben Extrusionsbedingungen.

In Tabelle XI sind die Durchsätze bei jeweils gleicher Leistungsaufnahme des Extruders aufgeführt.

Beispiel 34

800 Teile Calciumcarbonat mit einem mittleren Teilchendurchmesser von 2,5 µm und einer spezifischen Oberfläche (nach BET) von 2 $m^3/g$ werden in einem Schnellaufmischer mit 12 Teilen sek. Na-n-alkansulfonat (C-Kettenverteilung wie im Beispiel 28) bei Raumtemperatur für 20 Minuten gemischt.

Das so behandelte Calciumcarbonat wird mit 1200 Teilen Polypropylen (Dichte 0,905 $g/cm^3$, Schmelzindex 7 g/10 min., enthaltend 0,5 Gew.-% eines phenolischen Stabilisators und 1,75 Gew.-% eines schwefelhaltigen Costabilisators) in einem Pflugschaufelmischer gut vermischt.

Für einen Vergleichsversuch werden 800 Teile unbehandeltes Calciumcarbonat mit 1200 Teilen Polypropylen auf die gleiche Weise gemischt. Die Gemische werden wie im Beispiel 33 beschrieben weiter verarbeitet.

In Tabelle XI sind die Durchsätze bei jeweils gleicher Leistungsaufnahme des Extruders aufgeführt.

Beispiel 35

1200 Teile des gleichen Calciumcarbonats wie im Beispiel 34 werden in einem Schnellaufmischer mit 16 Teilen sek.

Na-n-alkansulfonat (C-Kettenverteilung wie im Beispiel 28) bei Raumtemperatur für 20 Minuten gemischt. Das so behandelte Calciumcarbonat wird mit 800 Teilen des gleichen Polypropylens wie im Beispiel 34 in einem Pflugschaufelmischer gut vermischt.

Für einen Vergleichsversuch werden 1200 Teile unbehandeltes Calciumcarbonat mit 800 Teilen Polypropylen auf die gleiche Weise gemischt.
Die Gemische werden wie im Beispiel 33 beschrieben weiter verarbeitet.

In einem Vergleichsversuch zu Beispiel 33 werden 600 Teile Calciumcarbonat in einem Schnellaufmischer mit 9 Teilen Oktanphosphonsäure bei 80°C für 20 Minuten gemischt. Das so behandelte Calciumcarbonat wird mit 1400 Teilen Polyethylen in einem Pflugschaufelmischer gut vermischt. Das Gemisch wird wie im Beispiel 33 beschrieben weiter verarbeitet.

In einem Vergleichsversuch zu Beispiel 34 werden 800 Teile Calciumcarbonat in einem Schnellaufmischer mit 12 Teilen Oktanphosphonsäure bei 80°C für 20 Minuten gemischt. Das so behandelte Calciumcarbonat wird mit 1200 Teilen Polypropylen in einem Pflugschaufelmischer gut vermischt. Das Gemisch wird wie im Beispiel 33 beschrieben weiter verarbeitet.

In einem weiteren Vergleichsversuch zu Beispiel 35 werden 1200 Teile des gleichen Calciumcarbonats wie im Beispiel 34 in einem Schnellaufmischer mit 16 Teilen Oktanphosphonsäure bei 80°C für 20 Minuten gemischt. Das so behandelte Calciumcarbonat wird mit 800 Teilen Polypropylen wie im Beispiel 34 in einem Pflugschaufelmischer gut vermischt.

Das Gemisch wird wie im Beispiel 33 beschrieben weiter verarbeitet.

In Tabelle XI sind die Durchsätze bei jeweils gleicher Leistungsaufnahme des Extruders aufgeführt.

Tabelle XI

| Beispiel | Haftvermittler | Durchsatz kg/h |
|---|---|---|
| 33 | - | 2,05 |
| 33 | Oktanphosphonsäure | 3,0 |
| 33 | sek. Na-n-alkansulfonat | 3,16 |
| 34 | - | 2,4 |
| 34 | Oktanphosphonsäure | 2,8 |
| 34 | sek. Na-n-alkansulfonat | 3,0 |
| 35 | - | 1,53 |
| 35 | Oktanphosphonsäure | 2,5 |
| 35 | sek. Na-n-alkansulfonat | 3,0 |

Beispiel 36

Zu 500 Teilen Calciumcarbonat mit einem mittleren Teilchendurchmesser von 2,5 µm und einer spezifischen Oberfläche (nach BET) von 2 $m^2/g$ wird innerhalb 10 Minuten in einem Schnelllaufmischer bei 1000 U/min. aus einer Zerstäubungsvorrichtung eine Lösung von 8 Teilen einer sek. n-Alkansulfonsäure (Kettenverteilung: 3 % C 13, 25 % C 13, 30 % C 15, 25 % C 16, 15 % C 17, 2 % C 18), in 2 Teilen Wasser gesprüht.

450 Teile des so behandelten Calciumcarbonats werden mit 1050 Teilen Polyethylen (Dichte 0,96 $g/cm^3$, Schmelzindex 23 g/10 min, enthaltend 0,42 Gew.-% eines phenolischen Stabilisators und 2,5 Gew.-% eines schwefelhaltigen Costabilisators) in einem Pflugschaufelmischer gut vermischt.

Die Weiterverarbeitung des Gemisches erfolgt wie in Beispiel 1 beschrieben.

Zu einem Vergleichsbeispiel werden 450 Teile unbehandeltes Calciumcarbonat mit 1050 Teilen Polyethylen auf die gleiche Weise gemischt und weiterverarbeitet.

Die Eigenschaften der Prüfkörper sind in Tabelle XII aufgeführt. Als Probekörper dient 1/2 Normstab.

Tabelle XII

| Beispiel | Dehnung | Zugfestigkeit $N/mm^2$ | Schlagzähigkeit $mJ/mm^2$ | Schlagzugzähigkeit $mJ/mm^2$ |
|---|---|---|---|---|
| Vergl. | 20 | 23 | 40 | 80 |
| 36 | 26 | 21 | ohne Bruch | 100 |

Beispiel 37

Zu 500 Teilen Calciumcarbonat mit einem mittleren Teilchendurchmesser von 2,5 µm und einer spezifischen Oberfläche (nach BET) von 2 $m^2/g$ wird innerhalb 10 min. in einem Schnellaufmischer bei 1000U/min. aus einer Zerstäubungsvorrichtung eine Lösung von 8 Teilen einer sek. n-Alkansulfonsäure (Kettenverteilung: 3 % C 13, 25 % C 14, 30 % C 15, 25 % C 16, 15 % C 17, 2 % C 18) in 2 Teilen Wasser gesprüht.

450 Teile des so behandelten Calciumcarbonats werden mit 1050 Teilen Polypropylen (Dichte 0,905 g/$cm^3$, Schmelzindex 7 g/10 min., enthaltend 0,5 Gew.-% eines phenolischen Stabilisators und 1,75 Gew.-% eines schwefelhaltigen Costabilisators) in einem Pflugschaufelmischer gut vermischt.

Die Weiterverarbeitung des Gemisches erfolgt wie in Beispiel 1 beschrieben.

In einem Vergleichsbeispiel werden 450 Teile unbehandeltes Calciumcarbonat mit 1050 Teilen Polypropylen auf die gleiche Weise gemischt und weiterverarbeitet.

Die Eigenschaften der Prüfkörper sind in Tabelle XIII aufgeführt. Als Prüfkörper dient 1/2 Normstab.

<u>Tabelle XIII</u>

| Beispiel | Dehnung % | Zugfestigkeit N/$mm^2$ | Schlagzähigkeit mJ/$mm^2$ | Schlagzugzähigkeit mJ/$mm^2$ |
|---|---|---|---|---|
| Vergl. | 130 | 29 | 45 | 200 |
| 37 | 130 | 32 | 95 | 260 |

Patentansprüche:

1. Füllstoff enthaltende Kunststoff-Formmasse bestehend aus 90 bis 20 Gewichtsteilen eines Polyolefins, 10 bis 80 Gewichtsteilen eines Erdalkalicarbonates, üblichen Zusatzstoffen, sowie 0,1 bis 10 Gew.-%, bezogen auf den Füllstoff, eines Haftvermittlers, dadurch gekennzeichnet, daß sie als Haftvermittler eine schwefelorganische Verbindung der Formel

$$R - SO_3 \,.\, Me \qquad (I)$$

worin R
einen geradkettigen oder verzweigten Alkyl- oder Alkenylrest mit 6 bis 22 Kohlenstoffatomen, welcher durch eine Hydroxy- oder Acetoxygruppe substituiert sein kann,
den Rest $R^1-O(CH_2CH_2O)_m-$, worin $R^1$ einen Alkylrest mit 6 bis 22 Kohlenstoffatomen bedeutet und m 1 bis 4 ist,
den Rest $R^1-CO-O(CH_2)_n-$, worin $R^1$ die vorgenannte Bedeutung hat und n 2 bis 4 ist, oder
den Rest $R^1-CO-NH(CH_2)_n-$, worin $R^1$ und n die vorgenannten Bedeutungen haben, und
Me ein Alkalimetall oder Wasserstoff bedeuten,
enthält.

2. Verfahren zur Herstellung einer Füllstoff enthaltenden Kunststoff-Formmasse bestehend aus 90 bis 20 Gewichtsteilen eines Polyolefins, 10 bis 80 Gewichtsteilen eines Erdalkalicarbonats, üblichen Zusatzstoffen, sowie 0,1 bis 10 Gew.-%, bezogen auf den Füllstoff, eines Haftvermittlers durch Mischen der Bestandteile, dadurch gekennzeichnet, daß als Haftvermittler eine schwefelorganische Verbindung der Formel

$$R - SO_3 - Me \qquad (I)$$

worin R
einen geradkettigen oder verzweigten Alkyl- oder Alkylenrest mit 6 bis 22 Kohlenstoffatomen, welcher durch eine Hydroxy- oder Acetoxygruppe substituiert sein kann, den Rest $R^1-O(CH_2CH_2O)_m-$, worin $R^1$ einen Alkylrest mit 6 bis 22 Kohlenstoffatomen bedeutet und m 1 bis 4 ist, den Rest $R^1-CO-O(CH_2)_n-$, worin $R^1$ die vorgenannte Bedeutung hat und n 2 bis 4 ist, oder den Rest $R^1-CO-NH(CH_2)_n-$, worin $R^1$ und n die vorgenannten Bedeutungen haben, und Me ein Alkalimetall oder Wasserstoff bedeuten, verwendet wird.

Patentansprüche für Österreich:

1. Verfahren zur Herstellung einer Füllstoff enthaltenden Kunststoff-Formmasse bestehend aus 90 bis 20 Gewichtsteilen eines Polyolefins, 10 bis 80 Gewichtsteilen eines Erdalkalicarbonats, üblichen Zusatzstoffen, sowie 0,1 bis 10 Gew.-%, bezogen auf den Füllstoff, eines Haftvermittlers durch Mischen der Bestandteile, dadurch gekennzeichnet, daß als Haftvermittler eine schwefelorganische Verbindung der Formel

$$R - SO_3 - Me \qquad (I)$$

worin R einen geradkettigen oder verzweigten Alkyl-oder Alkylenrest mit 6 bis 22 Kohlenstoffatomen, welcher durch eine Hydroxy- oder Acetoxygruppe substituiert sein kann, den Rest $R^1-O(CH_2CH_2O)_m-$, worin $R^1$ einen Alkylrest mit 6 bis 22 Kohlenstoffatomen bedeutet und m 1 bis 4 ist, den Rest $R^1-CO-O(CH_2)_n-$, worin R die vorgenannte Bedeutung hat und n 2 bis 4 ist, oder den Rest $R^1-CO-NH(CH_2)_n-$, worin $R^1$ und n die vorgenannten Bedeutungen haben, und Me ein Alkalimetall oder Wasserstoff bedeutet, verwendet wird.

2. Verwendung der gemäß Anspruch 1 hergestellten Kunststoff-Formmasse zur Herstellung von extrudierten und spritzgegossnen Formteilen.

Europäisches Patentamt

# EUROPÄISCHER RECHERCHENBERICHT

Nummer der Anmeldung
EP 80 10 1288

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | FR - A - 2 027 141 (E.I. DU PONT)<br>* Patentanspruch 1; Seite 6, Zeile 35 - Seite 7, Zeile 14 *<br>-- | 1,2 | C 08 L 23/00<br>C 08 K 9/04<br>5/42<br>3/26 |
| | US - A - 4 116 897 (A. HUSZAR)<br>* Patentanspruch 1; Spalte 4, Zeilen 25-30 *<br>-- | 1,2 | |
| P | DE - A - 2 823 507 (HOECHST)<br>* Patentansprüche 1-16; Beispiele 2,3 *<br>-- | 1,2 | RECHERCHIERTE SACHGEBIETE (Int. Cl. 3)<br>C 08 L 23/00<br>23/02<br>23/04<br>23/06<br>23/10<br>23/12<br>C 08 K 9/04<br>5/42 |
| A | CH - A - 406 630 (BASF)<br>* Patentanspruch 1; Seite 2, Zeilen 20-41 *<br>-- | 1 | |
| A | DE - A - 2 336 097 (LEHMANN)<br>* Patentanspruch 1 *<br>-- | 1 | |
| A | GB - A - 1 002 207 (MORTON SALT)<br>* Patentanspruch 1 *<br>------- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

X Der vorliegende Recherchenbericht wurde für alle Patentansprüche erstellt.

| Recherchenort | Abschlußdatum der Recherche | Prüfer |
|---|---|---|
| DEN HAAG | 30.06.1980 | GOOVAERTS |